(19) **Europäisches Patentamt / European Patent Office / Office européen des brevets**

(11) **EP 4 701 180 A1**

(12) # EUROPEAN PATENT APPLICATION

(43) Date of publication:
**25.02.2026 Bulletin 2026/09**

(21) Application number: **25174742.4**

(22) Date of filing: **07.05.2025**

(51) International Patent Classification (IPC):
**H04N 19/103** (2014.01)   **G06T 9/00** (2006.01)
**H04N 19/147** (2014.01)   **H04N 19/172** (2014.01)
**H04N 19/46** (2014.01)

(52) Cooperative Patent Classification (CPC):
**H04N 19/103; G06T 9/002; H04N 19/147; H04N 19/172; H04N 19/46**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.08.2024 KR 20240112145**

(71) Applicant: **Samsung Electronics Co., Ltd**
**Suwon-si, Gyeonggi-do 16677 (KR)**

(72) Inventors:
• **LEE, Wonhee**
  **16678 Suwon-si (KR)**
• **KANG, Seok**
  **16678 Suwon-si (KR)**
• **KIM, Seungeon**
  **16678 Suwon-si (KR)**
• **KIM, Jeongwon**
  **16678 Suwon-si (KR)**
• **KIM, Jun Hyuk**
  **16678 Suwon-si (KR)**
• **SONG, Wonseop**
  **16678 Suwon-si (KR)**
• **CHOI, Woosuk**
  **16678 Suwon-si (KR)**
• **SUNG, Young Hun**
  **16678 Suwon-si (KR)**
• **OH, Dokwan**
  **16678 Suwon-si (KR)**

(74) Representative: **Marks & Clerk LLP**
**15 Fetter Lane**
**London EC4A 1BW (GB)**

(54) **DATA PROCESSING METHOD USING NEURAL NETWORK MODEL AND ELECTRONIC DEVICE FOR PERFORMING THE SAME**

(57)    A data processing method may comprise receiving input data, selecting an encoder to encode the input data among a plurality of encoders based on the input data, obtaining a vector value by encoding the input data using the selected encoder, and generating the encoded data comprising the vector value, and identification data that identifies a decoder to decode the vector value among a plurality of decoders.

```
           Start
             │
┌──────────────────────────────┐
│      Receive input data       │──── 210
└──────────────────────────────┘
             │
┌──────────────────────────────┐
│ Obtain vector value from each │──── 220
│          of encoders          │
└──────────────────────────────┘
             │
┌──────────────────────────────┐
│ Select vector value to be     │──── 230
│ included in encoded data      │
│ from vector values using      │
│ neural network model          │
└──────────────────────────────┘
             │
┌──────────────────────────────┐
│ Generate encoded data         │──── 240
│ including selected vector     │
│ value and identification data │
│ for identifying decoder to    │
│ decode selected vector value  │
└──────────────────────────────┘
             │
            End
```

FIG. 2

**EP 4 701 180 A1**

**Description**

BACKGROUND

1. Field of the Invention

The present disclosure relates to a data processing method using a neural network model and an electronic device for performing the same.

2. Description of the Related Art

As technologies utilizing neural network models (or neural networks) are rapidly developing, video compression and reconstruction technologies based on neural network models are also rapidly developing. A neural codec may operate in a manner of learning the features of input data using a neural network model and compressing and reconstructing the input data based on the features. Entropy coding may be used in a neural codec to increase data compression efficiency and reduce transmission bandwidth.

SUMMARY

According to an aspect of the present disclosure, a data processing method may include: A data processing method comprising: receiving, by a first processor, input data; selecting, by the first processor, an encoder to encode the input data among a plurality of encoders based on the input data; obtaining, by the first processor, a vector value by encoding the input data using the selected encoder; and generating, by the first processor, encoded data comprising the vector value, and identification data that identifies a decoder to decode the vector value among a plurality of decoders.

The identification data comprises a flag value or index value for identifying the decoder among the plurality of decoders corresponding to the plurality of encoders.

The data processing method may include: receiving, by a second processor, the encoded data and the identification data, selecting, by the second processor, a decoder to decode the vector value among the plurality of decoders, based on the identification data, and obtaining, by the second processor, reconstructed data corresponding to the input data by performing decoding on the vector value comprised in the encoded data using the selected decoder.

Each of the plurality of decoders has a relationship of a pair with one of the plurality of encoders, and the number of the plurality of decoders is equal to or less than the number of the plurality of encoders.

A first pair of a first encoder and a first decoder and a second pair of a second encoder and a second decoder are trained based on different loss functions.

The encoded data and the identification data are transmitted from the first processor to the second processor, or output from the first processor, stored in a memory, and then transmitted to the second processor.

The first processor, the second processor, and the memory are included in a system-on-chip (SoC).

The first processor is included in a first electronic device, and the second processor is included in a second electronic device.

The input data comprises pixel values of pixels included in a local region of an image.

The input data comprises at least one of image data, video data, audio data, or any combination thereof.

The input data is an image data, and the first processor is further configured to select the encoder to encode the image data among the plurality of encoders based on pixel values of the image data.

The first processor is further configured to select the encoder to encode the input data among the plurality of encoders using a neural network model that receives the input data as input.

According to another aspect of the present disclosure, an electronic device for performing a data processing method may include: a first processor, and a memory configured to store instructions to be executed by the first processor, wherein when the instructions are executed by the first processor, the first processor is configured to: receive input data, select an encoder to encode the input data among a plurality of encoders based on the input data, obtain a vector value by encoding the input data using the selected encoder, and generate the encoded data comprising the vector value and identification data that identifies a decoder to decode the vector value among a plurality of decoders.

The electronic device may comprise: a second processor, wherein the second processor is configured to: in response to receiving the encoded data and the identification data, select a decoder to decode the first vector value among the plurality of decoders, based on the identification data, and obtain reconstructed data corresponding to the input data by performing decoding on the vector value comprised in the encoded data using the selected decoder.

The electronic device may comprise a communication circuit, wherein the first processor controls the communication circuit to transmit a bitstream comprising the encoded data and the identification data to another device.

Each of the plurality of decoders has a relationship of a pair with one of the plurality of encoders, and the number of the plurality of decoders is equal to or less than the number of the plurality of encoders.

The plurality of encoders comprise a first encoder and a second encoder, the plurality of decoders comprise a first decoder paired with the first encoder and a second decoder paired with the second encoder, and a first pair of the first encoder and the first decoder and a second pair of the second encoder and the second decoder are trained based on different loss functions.

BRIEF DESCRIPTION OF THE DRAWINGS

These and/or other aspects, features, and advantages of the invention will become apparent and more readily appreciated from the following description of embodiments, taken in conjunction with the accompanying drawings of which:

FIG. 1 is a diagram illustrating components of an electronic device for performing a data processing method according to one or more embodiments;

FIG. 2 is a flowchart illustrating operations of a data processing method of encoding data using a neural network model according to one or more embodiments;

FIG. 3 is a flowchart illustrating operations of a data processing method of encoding data using a neural network model according to one or more embodiments;

FIG. 4 is a flowchart illustrating operations of a data processing method of decoding encoded data according to one or more embodiments;

FIGS. 5A and 5B are diagrams illustrating a structure for encoding and decoding data using a plurality of encoders and a plurality of decoders according to one or more embodiments;

FIG. 6 is a diagram illustrating a structure for encoding and decoding data using different numbers of encoders and decoders according to one or more embodiments;

FIG. 7 is a diagram illustrating a structure for encoding and decoding data using a plurality of encoders and a plurality of decoders according to one or more embodiments;

FIG. 8 is a diagram illustrating a data processing system including a data encoding device and a data decoding device according to one or more embodiments;

FIG. 9 is a diagram illustrating a data processing process between a data encoding device and a data decoding device according to one or more embodiments;

FIG. 10 is a diagram illustrating a data processing process between a data encoding device and a data decoding device according to one or more embodiments;

FIG. 11 is a block diagram illustrating components of an electronic device for performing a data processing method of data encoding according to one or more embodiments; and

FIG. 12 is a block diagram illustrating components of an electronic device for performing a data processing method of data decoding according to one or more embodiments.

DETAILED DESCRIPTION

The following detailed structural or functional description is provided as an example only and various alterations and modifications may be made to the embodiments. Here, the embodiments are not construed as limited to the disclosure and should be understood to include all changes and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

As used herein, the singular forms "a", "an", and "the" include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used in connection with embodiments of the disclosure, the term "module" may include a unit implemented in hardware, software, or firmware, and may interchangeably be used with other terms, for example, "logic," "logic block," "part," or "circuitry." A module may be a code block that performs a predetermined function or task, and may configure a larger program or a software system through interaction with other modules. Alternatively, a module may refer to a hardware component or device capable of performing a function independently, and such a module may be combined with other hardware to form a whole system. A module may be a single integral component, or a minimum unit or part thereof, adapted to perform one or more functions. For example, according to one or more embodiments, the module may be implemented in the form of an application-specific integrated circuit (ASIC).

In addition, the term "or" is intended to mean not exclusive "or" but inclusive "or". That is, "X includes A or B" may include X including A, X including B, or X including both A and B. Further, it should be understood that the term "and/or" used herein refers to and includes all available combinations of one or more items among enumerated related items.

Unless otherwise defined, all terms used herein including technical or scientific terms have the same meaning as commonly understood by one of ordinary skill in the art to which examples belong. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like components, and any repeated description related thereto will be omitted.

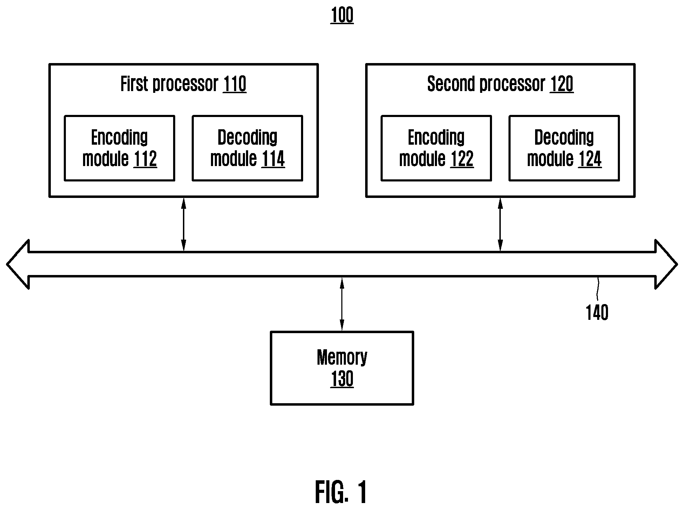

FIG. 1 is a diagram illustrating components of an electronic device for performing a data processing method according to one or more embodiments.

Referring to FIG. 1, an electronic device 100 may include a first processor 110, a second processor 120, and a memory 130. The components of the electronic device 100 may communicate with each other through a communication bus 140. The first processor 110, the second processor 120, the memory 130, and the communication bus 140 may be included in a system-on-chip (SoC). A portion of the components may be omitted from the electronic device 100, or other components may be added thereto. For example, the electronic device 100 may include the first processor 110 and the memory 130, but may not include the second processor 120.

The first processor 110 and the second processor 120 may perform a variety of data processing or computation. As at least part of data processing or computation, the first processor 110 and the second processor 120 may store instructions and/or data received from other components in the memory 130, process the instructions and/or data stored in the memory 130, and store processing results in the memory 130. The first processor 110 and the second processor 120 may include, for example, a central processing unit (CPU), a graphics processing unit (GPU), a neural processing unit (NPU), a media processing unit (MPU), a data processing unit (DPU), a vision processing unit (VPU), a video processor, an image processor, a display processor, a microprocessor, a processor core, a multi-core processor, an application-specific integrated circuit (ASIC), a field programmable gate array (FPGA), or any combination thereof.

The memory 130 may store a variety of data used by components (e.g., the first processor 110 and the second processor 120) of the electronic device 100. The data may include, for example, a program (e.g., an application), and input data and/or output data related thereto. The memory 130 may include a volatile memory or a non-volatile memory. The memory 130 may store instructions executable by the first processor 110 and/or the second processor 120. When the instructions stored in the memory 130 are executed by the first processor 110 and/or the second processor 120, the first processor 110 and/or the second processor 120 may perform the operations described herein.

The first processor 110 may include an encoding module 112 configured to generate encoded data by encoding data and/or a decoding module 114 configured to generate reconstructed data by decoding encoded data generated by another component (e.g., the second processor 120). The second processor 120 may include an encoding module 122 configured to generate encoded data by encoding data and/or a decoding module 124 configured to generate reconstructed data by decoding encoded data generated by another component (e.g., the first processor 110).

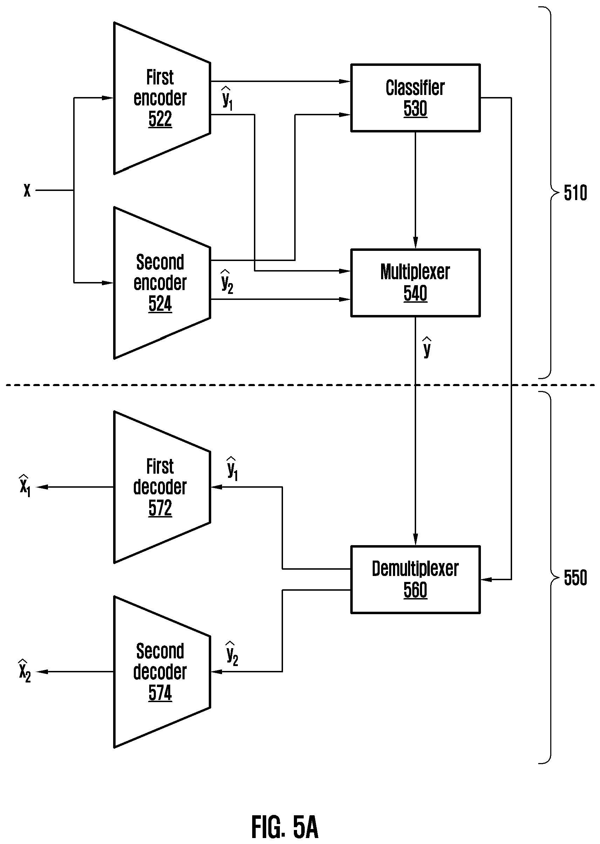

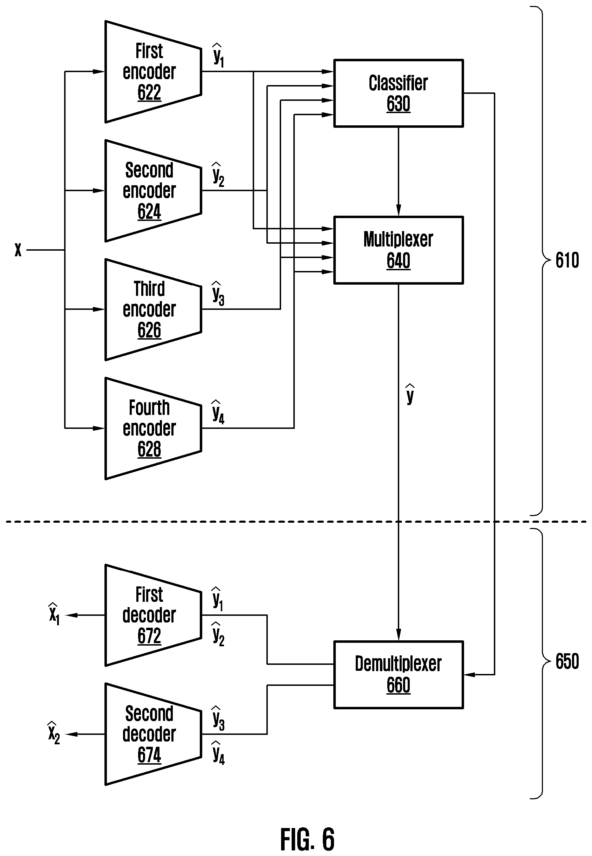

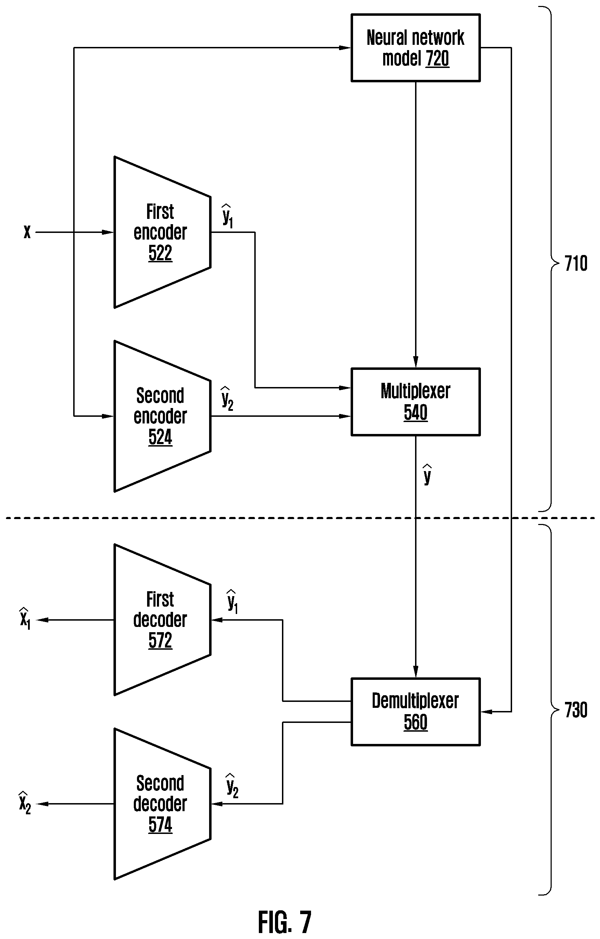

The encoding module 112 (e.g., an encoding module 510 of FIG. 5A, an encoding module 610 of FIG. 6, or an encoding module 710 of FIG. 7) of the first processor 110 may generate encoded data by encoding input data that is input to the encoding module 112. The input data may include at least one of image data, video data, audio data, or any combination thereof, but is not limited thereto. If the input data is image data, the input data may include pixel values of pixels included in a local region (e.g., a block region) of an image. The encoding module 112 may include a plurality of encoders configured to convert input data into a vector (e.g., a latent vector) value with smaller dimensions.

In one or more embodiments, the encoding module 112 may receive input data, and obtain a vector value into which the input data is encoded from each of the plurality of encoders by inputting the input data to each of the plurality of encoders. The encoding module 112 may select a vector value to be included in the encoded data from vector values, using a neural network model (e.g., a classifier 530 of FIG. 5A or a classifier 630 of FIG. 6) that receives the vector values output from the encoders as input. The plurality of encoders may all perform encoding on the input data and output respective vector values, and the neural network model may determine a vector value to be included in the encoded data based on the vector values output from the encoders. The plurality of encoders may be connected to a multiplexer (e.g., a multiplexer 540 of FIG. 5A or a multiplexer 640 of FIG. 6), and the multiplexer may control the connection between the encoders and a data storage so that the vector value selected by the neural network model may be stored in the encoded data. In the data storage, the respective vector values generated by encoding the input data may be stored in the encoded data.

In one or more embodiments, the encoding module 112 may receive input data, and select an encoder to encode the input data among the plurality of encoders using a neural network model (e.g., a neural network model 720 of FIG. 7) that receives the input data as input. The encoding module 112 may obtain a vector value into which the input data is encoded from the selected encoder by encoding the input data using the selected encoder. Accordingly, encoding may be performed by a portion selected from the encoders, not by all the plurality of encoders. The plurality of encoders may be connected to a multiplexer (e.g., a multiplexer 540 of FIG. 7), and the multiplexer may control the connection between the encoders and the data storage so that the vector value from the encoder selected by the neural network model may be stored in the encoded data.

In the above embodiments, the encoding module 112 may generate encoded data including the selected vector value and identification data for identifying a decoder to decode the selected vector value. The encoded data may include a bit value for a latent vector value output from the encoder. The identification data may include a flag value or index value for identifying a decoder to perform decoding on the vector value into which the input data is encoded among the plurality of decoders corresponding to the encoders. Each of the decoders may have a relationship of a pair with one of the encoders. The flag value or index value of the identification data may be a value for identifying a predetermined encoder-decoder pair among a plurality of encoder-decoder pairs.

The encoded data and the identification data generated by the first processor 110 may be transmitted from the first processor 110 to the second processor 120, or may be output from the first processor 110, stored in the memory 130 (e.g., a buffer memory within the memory 130), and then transmitted to the second processor 120. The encoded data and the identification data may be transmitted to the memory 130 or the second processor 120 through the communication bus 140. The encoded data and the identification data may be transmitted in the form of a bitstream. In some embodiments, the encoded data and the identification data may be encoded by an entropy encoder and then transmitted in the form of a bitstream. Entropy encoding may be a coding method that assigns different code lengths representing symbols according to the occurrence probabilities of the symbols corresponding to vector values grouped channelwise. Entropy encoding may assign shorter codes to symbols that occur frequently and longer codes to symbols that occur rarely. Statistical redundancy in input data may be removed through entropy encoding.

The second processor 120 may generate reconstructed data by performing decoding based on the received encoded data and identification data. If the second processor 120 receives a bitstream generated through entropy encoding, the decoding module 124 (e.g., a decoding module 550 of FIG. 5A, a decoding module 650 of FIG. 6, or a decoding module 730 of FIG. 7) of the second processor 120 may perform entropy decoding on the received bitstream. By entropy decoding, the encoding data and identification data included in the bitstream may be reconstructed. The decoding module 124 of the second processor 120 may select a decoder to decode the vector value included in the encoded data among the plurality of decoders corresponding to the encoders based on the identification data, in response to receiving the encoded data and the identification data. The decoding module 124 may obtain reconstructed data corresponding to the input data by performing decoding on the vector value included in the encoded data using the selected decoder. The decoding module 124 may identify a decoder to decode the encoded data among the decoders based on a value (e.g., a flag value or index value) of the identification data and perform a decoding process by inputting the encoded data to the identified decoder.

In the above embodiments, it has been described that the encoding process is performed by the encoding module 112 of the first processor 110 and that the decoding process is performed by the decoding module 124 of the second processor 120 for ease of description, and the embodiments should not be construed as being limited thereto. The encoding process may be performed by the encoding module 122 of the second processor 120, and the decoding process may be performed by the decoding module 114 of the first processor 110.

While the electronic device 100 is illustrated with two separate processors (i.e., the first processor 110 and the second processor 120) in FIG. 1, it may alternatively include a single processor or more than two processors. For instance, the electronic device 100 may include a single processor that integrates one or more encoding modules and one or more decoding modules.

In one or more embodiments, during an artificial intelligence (AI) model training stage, an encoding module and a decoding module may be include within the same device. After the training stage, the trained encoding and decoding modules might be deployed in two separate devices during the inference stage.

Although FIG. 1 depicts the first processor 110 and the second processor 120 within the same electronic device 100, they may instead reside in different devices. For example, the first processor 110 could be part of a server configured to generate a bitstream including data encoded via the encoding module 112. The second processor 120 may be part of a user terminal device configured to receive the bitstream from the server over a wired or wireless network and decode the data using the decoding module 124.

Each of the encoding module 112 and the encoding module 122 may be referred to as a neural encoder, and each of the decoding module 114 and the decoding module 124 may be referred to as a neural decoder. A neural encoder may be applied to various devices for compressing images (or videos), and a neural decoder may be applied to various devices for reconstructing compressed images (or videos). The encoding module 112 and the decoding module 114 may perform the function of a neural codec, and the encoding module 122 and the decoding module 124 may also perform the function of a neural codec. The first processor 110 and/or the second processor 120 capable of performing the function of a neural codec may be implemented in a personal computer (PC), a display device (e.g., a TV or a projector), a streaming service server, a content storage device, and/or a portable device. The portable device may include, for example, a laptop computer, a mobile phone, a smart phone, a tablet PC, a mobile internet device (MID), a personal digital assistant (PDA), an enterprise digital assistant (EDA), a digital still camera, a digital video camera, a portable multimedia player (PMP), a personal or portable navigation device (PND), a handheld game console, and/or a smart device. The smart device may include a smart watch, a smart band, and/or a smart ring.

In one or more embodiments, the data processing process between the first processor 110 and the second processor 120 may be performed in a frame buffer compression environment in which image data (or video data) is compressed between intellectual properties (IPs) (e.g., GPUs, NPUs, video processors, or display processors) within an SoC and transmitted via the memory 130 (e.g., dynamic random-access memory (DRAM)). Here, the memory 130 may include a frame buffer for temporarily storing compressed image data. In transmitting image data to another IP, the image data is compressed and transmitted according to the footprint constraint, which indicates the maximum data size limit per image block region. For example, assuming that the size of image data to be transmitted is 192 bytes and the footprint constraint is 50%, the maximum data size of compressed image data when compressing and transmitting the image data may be 96 bytes. This footprint constraint may impose constraints on a bit depth (or bit precision), which determines the size of a latent vector value transmitted between IPs and the precision of the latent vector value. The footprint constraint makes it difficult to increase compression performance even with an increased neural network capacity (e.g., number of layers or number of parameters) of an encoder and/or a decoder implemented as a neural network model.

According to embodiments described herein, using a plurality of encoders and decoders with different or varying characteristics for data compression may provide enhance performance (e.g., reconstructed images with better quality or a high compression ratio) compared to using a single encoder, while satisfying the footprint constraint. The embodiments may reduce power consumption by reducing the bandwidth between IPs and memory within the SoC through an improved data compression ratio. In image data compression, an encoding process may be performed by an encoder for each image block region of an image. In the embodiments, a trained neural network model (e.g., the classifier 530 of FIG. 5A or the classifier 630 of FIG. 6) may select the most suitable encoder-decoder pair from a plurality of encoder-decoder pairs, for encoding and decoding on a given image block region. The optimal encoder-decoder pair may be selected according to the characteristics of the image block region. The identification data may include values for identifying an encoder-decoder pair selected for each image block region. The encoder-decoder pairs and the neural network model may be trained through machine learning based on a loss function (e.g., a rate loss or a distortion loss).

The embodiments described herein may be applied to a neural network model-based frame buffer compression (FBC) technology. Additionally, the embodiments may be applied to various applications having an encoder-decoder structure as well as image compression. For example, the embodiments may be applied to a system with a limited number of dictionaries, such as a vector quantized variational autoencoder (VQ-VAE) structure, and may also be applied to video compression or audio compression.

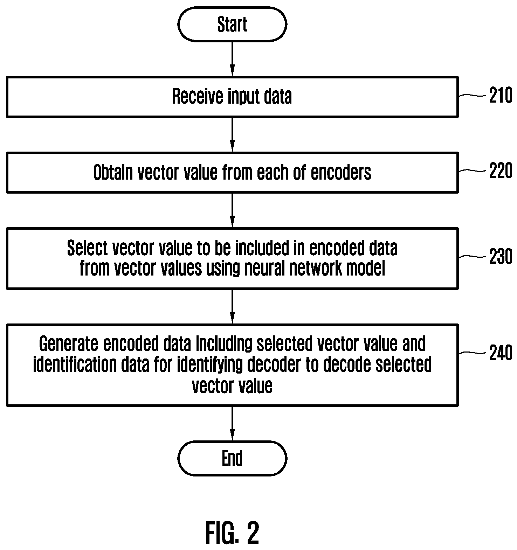

FIGS. 2, 3, and 4 are diagrams illustrating embodiments of data processing methods described herein. A portion of operations of FIGS. 2, 3, and 4 may be performed simultaneously or in parallel with another operation, and the order of the operations may be changed. In addition, a portion of the operations may be omitted, or another operation may be additionally performed.

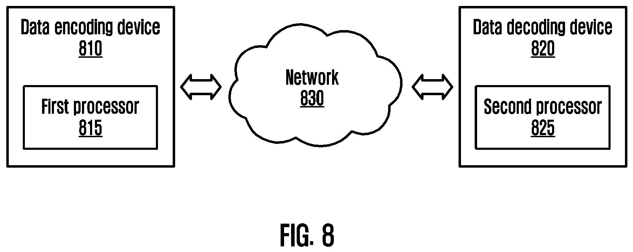

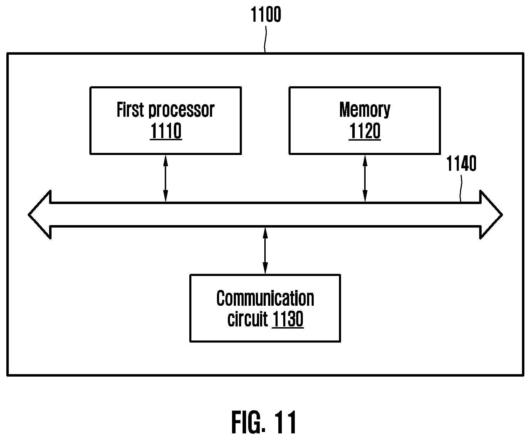

FIG. 2 is a flowchart illustrating operations of a data processing method of encoding data using a neural network model according to one or more embodiments. The data processing method may be performed by a first processor (e.g., the first processor 110 of FIG. 1) included in an electronic device (e.g., the electronic device 100 of FIG. 1) or a first processor (e.g., a first processor 815 of FIG. 8 or a first processor 1110 of FIG. 11) included in a data encoding device (e.g., a data encoding device 810 of FIG. 8 or an electronic device 1100 of FIG. 11) described herein.

Referring to FIG. 2, in operation 210, the first processor may receive input data. The input data may include at least one of image data, video data, audio data, or any combination thereof. If data to be encoded is an image, the input data may be image data of a block region, which is a local region of the image.

In operation 220, the first processor may obtain a vector value (e.g., a latent vector value) into which the input data is encoded from each of a plurality of encoders (e.g., a first encoder 522 and a second encoder 524 of FIG. 5A, or a first encoder 622, a second encoder 624, a third encoder 626, and a fourth encoder 628 of FIG. 6) by inputting the input data to each of the plurality of encoders. The encoders may encode the input data into a latent space of smaller dimensions than the original input data and output latent vector values as encoding results. Each of the encoders may have a form combined with a quantizer that quantizes data and outputs the quantized data, but is not limited thereto. When an encoder is combined with a quantizer, the encoder may generate a vector value by encoding input data and then quantize the generated vector value. Through quantization, a vector value with dimensions of channel (c) X height (H) X width (W) may be obtained. Additionally, the encoder may clamp the vector value output from the encoder within a predetermined bit range (e.g., 8 bits) and quantize the clamped vector value.

In operation 230, the first processor may select a vector value to be included in encoded data from vector values from the encoders using a neural network model (e.g., the classifier 530 of FIG. 5A or the classifier 630 of FIG. 6) that receives the vector values as input. The neural network model may be a model trained to select a vector value that is determined to be most appropriate to be included in the encoded data among the vector values input to the neural network model. The neural network model may select a quantized vector value to be included in the encoded data from the quantized vector values generated by the encoders.

In operation 240, the first processor may generate encoded data including the selected vector value and identification data for identifying a decoder to decode the selected vector value. The vector value included in the encoded data may be, for example, a latent vector value representing the input data as a quantized representation in the latent space. The identification data may include a flag value or index value for identifying a decoder to perform decoding on the vector value into which the input data is encoded among the plurality of decoders corresponding to the encoders. The first processor may generate a bitstream corresponding to the input data by performing entropy encoding on the encoded data and the identification data.

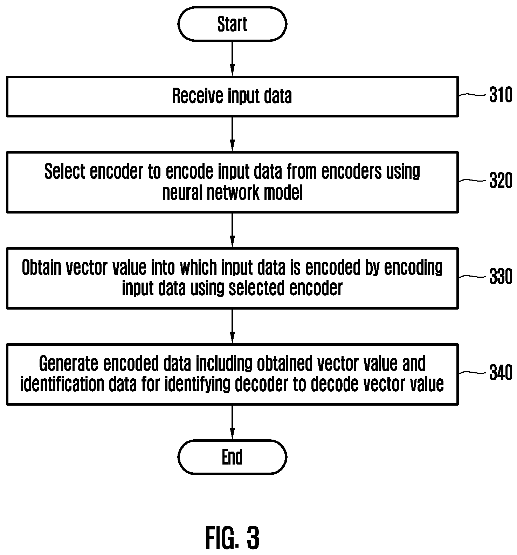

FIG. 3 is a flowchart illustrating operations of a data processing method of encoding data using a neural network model according to one or more embodiments. The data processing method may be performed by a first processor (e.g., the first processor 110 of FIG. 1) included in an electronic device (e.g., the electronic device 100 of FIG. 1) or a first processor (e.g., the first processor 815 of FIG. 8 or the first processor 1110 of FIG. 11) included in a data encoding device (e.g., the data encoding device 810 of FIG. 8 or the electronic device 1100 of FIG. 11) described herein.

Referring to FIG. 3, in operation 310, the first processor may receive input data.

In operation 320, the first processor may select an encoder to encode the input data among a plurality of encoders (e.g., the first encoder 522 and the second encoder 524 of FIG. 7) using a neural network model (e.g., the neural network model 720 of FIG. 7) that receives the input data as input. The neural network model may be a model trained to select an encoder that is determined to be most appropriate to perform encoding on the input data among the plurality of encoders, based on the input data that is input to the neural network model. The neural network model may, for example, select one encoder to perform encoding on the input data from the encoders.

In operation 330, the first processor may obtain a vector value (e.g., a latent vector value) into which the input data is encoded, by using the encoder selected by the neural network model.

In operation 340, the first processor may generate encoded data that includes the obtained vector value and identification data that identifies a decoder selected to decode the obtained vector value. The first processor may generate a bitstream corresponding to the input data by performing entropy encoding on the encoded data and the identification data. Operation 340 may be the same as operation 240 of FIG. 2.

When encoded data and identification data are generated according to the data processing method shown in FIG. 2 or FIG. 3, the encoded data and the identification data may be transmitted to a second processor. When the first processor is included in an SoC, the first processor may transmit a bitstream including the encoded data and the identification data to the second processor or to the second processor via a memory (e.g., the memory 130 of FIG. 1). When the first processor is included in a data encoding device, the first processor may transmit a bitstream including the encoded data and the identification data to a data decoding device (e.g., a data decoding device 820 of FIG. 8) via a network (e.g., a wireless network).

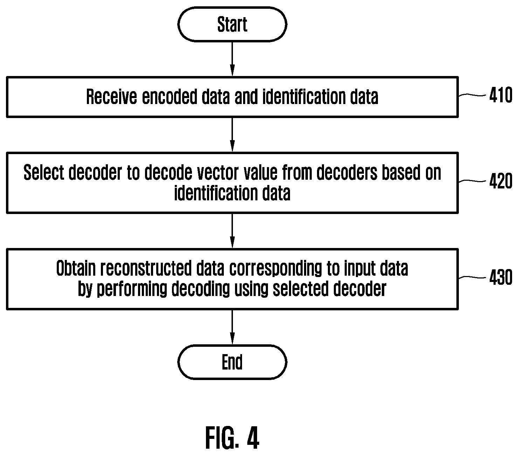

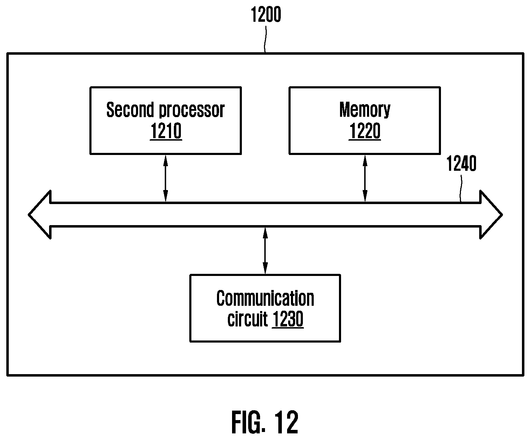

FIG. 4 is a flowchart illustrating operations of a data processing method of decoding encoded data according to one or more embodiments. The data processing method may be performed by a second processor (e.g., the first processor 120 of FIG. 1) included in an electronic device (e.g., the electronic device 100 of FIG. 1) or a second processor (e.g., a second processor 825 of FIG. 8 or a second processor 1210 of FIG. 12) included in a data decoding device (e.g., the data decoding device 820 of FIG. 8 or an electronic device 1200 of FIG. 12) described herein. Operations shown in FIG. 4 may be performed after the operations shown in FIG. 2 or the operations shown in FIG. 3.

Referring to FIG. 4, in operation 410, the second processor may receive encoded data and identification data. The encoded data and the identification data may be transmitted from a first processor to the second processor, or output from the first processor, stored in a memory, and then transmitted to the second processor. When the second processor receives a bitstream generated through entropy encoding, the second processor may perform entropy decoding on the received bitstream.

In operation 420, the second processor may select a decoder to decode the vector value included in the encoded data among a plurality of decoders corresponding to encoders based on the identification data. Each of the decoders may have a relationship of a pair with one of the encoders. For example, if the encoders include a first encoder and a second encoder, the decoders may include a first decoder paired with the first encoder and a second decoder paired with the second encoder. A first pair of the first encoder and the first decoder and a second pair of the second encoder and the second decoder may be trained based on different loss functions. The number of decoders may be equal to or less than the number of encoders, but is not limited thereto.

In operation 430, the second processor may obtain reconstructed data corresponding to the input data by performing decoding on the vector value included in the encoded data using the selected decoder. The second processor may identify a decoder to decode the encoded data among the decoders based on a value (e.g., a flag value or index value) of the identification data and perform a decoding process using the identified decoder.

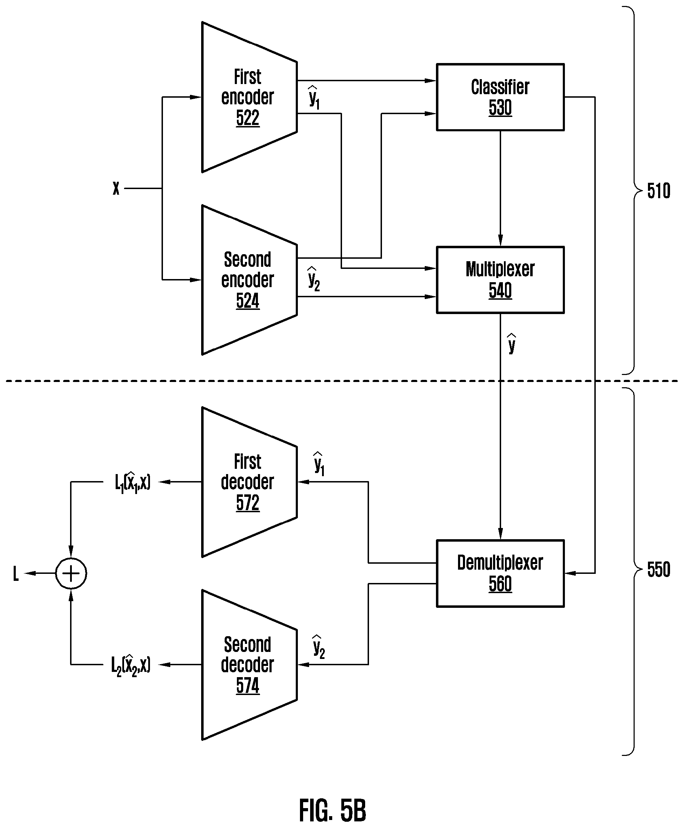

FIGS. 5A and 5B are diagrams illustrating a structure for encoding and decoding data using a plurality of encoders and a plurality of decoders according to one or more embodiments.

Referring to FIG. 5A, an encoding module 510 (e.g., the encoding module 112 or the encoding module 122 of FIG. 1) may generate encoded data by encoding input data x, and generate identification data for identifying a decoder to perform decoding. The input data x may include, for example, pixel values of pixels included in the entire region or a local region (e.g., a block region or a subblock region) of an image. The encoding module 510 may include a plurality of encoders (e.g., the first encoder 522 and the second encoder 524), the classifier 530, and the multiplexer 540.

The first encoder 522 and the second encoder 524 may be implemented as neural network models (e.g., deep neural networks). The first encoder 522 and the second encoder 524 may include, for example, convolutional layers. The first encoder 522 and the second encoder 524 may have the same or different neural network model structures. When the structures are the same, the first encoder 522 and the second encoder 524 may have different neural network model parameters (e.g., weights or biases). The first encoder 522 and the second encoder 524 may be trained using unsupervised learning or self-supervised learning.

Each of the first encoder 522 and the second encoder 524 may generate a vector value (e.g., a latent vector value $\hat{y}$) corresponding to the input data x by encoding the input data x. The first encoder 522 and the second encoder 524 may extract important features of the input data x and compress the extracted features into vector values (e.g., a latent vector value $\hat{y}$) having a data size smaller than that of the input data x (or vector values having reduced dimensions than those of the input data x). The first encoder 522 may generate a vector value $\hat{y}_1$ by encoding the input data x, and the second encoder 524 may generate a vector value $\hat{y}_2$ by encoding the input data x. The vector values $\hat{y}_1$ and $\hat{y}_2$ may be values quantized to be within a predetermined data size for transmission. Quantization may include quantization that applies a rounding operation, scalar quantization, vector quantization, and/or embedded quantization, but is not limited thereto. The bit depth of the vector values $\hat{y}_1$ and $\hat{y}_2$ may be determined during the quantization process. The vector values $\hat{y}_1$ and $\hat{y}_2$ may have the same data size and dimensions.

The vector values $\hat{y}_1$ and $\hat{y}_2$ may each be decoded by a predetermined decoder. For example, the vector values $\hat{y}_1$ may be decoded by a first decoder 572, and the vector value $\hat{y}_2$ may be decoded by a second decoder 574. The first decoder 572 and the second decoder 574 may each have a relationship of a pair with one of the first encoder 522 and the second encoder 524. For example, the first encoder 522 and the first decoder 572 may form a first pair, and the second encoder 524 and the second decoder 574 may form a second pair. Although two such encoder-decoder pairs are shown in FIG. 5A, three or more encoder-decoder pairs may be present. In addition, an example of a plurality of encoders and one decoder may also be possible. In this case, all the encoders may be paired with the one decoder. Each encoder-decoder pair (e.g., the first pair or the second pair) may be trained with different losses during the training process.

The classifier 530 may determine a vector value appropriate to compress the input data x. The classifier 530 may receive a vector value $\hat{y}_1$ (e.g., a set of vector values $\hat{y}_1$ for a plurality of image blocks included in the input data x) output from the first encoder 522 and a vector value $\hat{y}_2$ (e.g., a set of vector values $\hat{y}_2$ for the plurality of image blocks included in the input data x) output from the second encoder 524, and determine a vector value to be included in encoded data $\hat{y}$ among the received vector values $\hat{y}_1$ and $\hat{y}_2$ (e.g., vector values to be included in the encoded data $\hat{y}$ for each image block, among the set of vector values $\hat{y}_1$ and the set of vector values $\hat{y}_2$). The classifier 530 may select which of the vector values $\hat{y}_1$ and $\hat{y}_2$ to be transmitted to a decoding device (e.g., for each image block). The classifier 530 may be also referred to as a router.

The classifier 530 may refer to a neural network model in which artificial neurons (nodes) form a network by combining synapses. The classifier 530 may have a problem-solving ability by changing the strength of the synaptic connection through training or machine learning. The artificial neurons of the classifier 530 may include a combination of weights and/or biases, and a neural network may include one or more layers including a plurality of artificial neurons. The classifier 530 may include a convolutional neural network (CNN), a recurrent neural network (RNN), a perceptron, a multilayer perceptron, a feedforward (FF) network, a radial basis network (RBF), a deep feedforward (DFF) network, a long short-term memory (LSTM), a gated recurrent unit (GRU), an autoencoder (AE), a variational autoencoder (VAE), a denoising autoencoder (DAE), a sparse autoencoder (SAE), a Markov chain (MC), a Hopfield network (HN), a Boltzmann machine (BM), a restricted Boltzmann machine (RBM), a deep belief network (DBN), a deep convolutional network (DCN), a deconvolutional network (DN), a deep convolutional inverse graphics network (DCIGN), a generative adversarial network (GAN), a liquid state machine (LSM), an extreme learning machine (ELM), an echo state network (ESN), a deep residual network (DRN), a differentiable neural computer (DNC), a neural turning machine (NTM), a capsule network (CN), a Kohonen network (KN), a binarized neural network (BNN), a transformer, an attention network (AN), or any combination thereof. For example, the classifier 530 may be implemented as a neural network including a convolutional layer, a linear layer, and a rectified linear unit (ReLU) layer.

The classifier 530 may select an encoder-decoder pair to be applied for each input data x (e.g., each image block forming each input data x). The classifier 530 may determine which latent vector value to select for each image block region as a set of latent vector values are processed through the classifier 530. The classifier 530 may determine an optimal encoder-decoder pair (or neural codec) by analyzing the received vector values $\hat{y}_1$ and $\hat{y}_2$. The classifier 530 may be trained, for example, based on the vector values $\hat{y}_1$ and $\hat{y}_2$, to determine that encoding and decoding is to be performed through the first pair of the first encoder 522 and the first decoder 572 if an image block region corresponding to the input data x is likely to correspond to a region with a large amount of information (e.g., a high contrast region, an edge region, a contour region, or a text region), and to determine that encoding and decoding is to be performed through the second pair of the second encoder 524 and the second decoder 574 if the image block region is unlikely to correspond to a region with a large amount of information.

The classifier 530 may generate identification data including a flag value or index value for identifying the determined encoder-decoder pair. If the input data x is data about block regions of an image, the classifier 530 may select an optimal encoder-decoder pair to perform encoding and decoding for each image block region, and generate identification data by collecting a flag value or index value for identifying the selected encoder-decoder pair for each image block region. It is assumed that selection data for the selected encoder-decoder pair for the input data x output by the classifier 530 has a flag value of "0" or "1". If the flag value of "0" indicates that the first pair of the first encoder 522 and the first decoder 572 is selected for encoding and decoding a first image block of the input data x, the vector value $\hat{y}_1$ output from the first encoder 522 may be stored in encoded data $\hat{y}$ when the flag value is designated as "0", and "0" may be recorded in the identification data for the first image block. If the flag value of "1" indicates that the second pair of the second encoder 524 and the second decoder 574 is selected for encoding and decoding a second image block of the input data x, the vector value $\hat{y}_2$ output from the second encoder 524 may be stored in encoded data $\hat{y}$ when the flag value is designated as "1", and "1" may be recorded in the identification data for the second image block. The input data x may represent an image composed of a plurality of image blocks located at different x, y coordinates within the image. A flag value may be assigned to each image block, allowing an encoder-decoder pair that is suitable for each image block to be applied individually.

If the spatial dimensions of the encoded data $\hat{y}$ are w(width) $\times$ h(height), the identification data may have spatial dimensions equal to the spatial dimensions of the encoded data $\hat{y}$. If the flag value included in the identification data is expressed as c, a relationship of $\hat{y}(x, y) = \hat{y}_{c(x,y)}(x, y)$ may be satisfied. When a vector value is stored in the position value (x,y) of the encoded data $\hat{y}$, a flag value corresponding to the vector value may be stored in the same position value (x, y) of the identification data $\hat{y}_{c(x,y)}$. A flag value corresponding to a selection result of the classifier 530 may be matched to each position of the encoded data $\hat{y}$.

The first encoder 522 and the second encoder 524 may be connected to the multiplexer 540, and the multiplexer 540 may control the connection between the first encoder 522 and the second encoder 524 and a data storage so that the vector value selected by the classifier 530 may be stored in the encoded data $\hat{y}$. In the data storage, the vector value transmitted by the multiplexer 540 may be stored in the encoded data $\hat{y}$. The encoded data $\hat{y}$ may include an encoded vector value for each input data x. The data storage may be included in the multiplexer 540. In some embodiments, the vector value selected by the classifier 530 may be transmitted as the encoded data $\hat{y}$.

The classifier 530 may determine whether to include a vector value obtained from any one of the first encoder 522 and the second encoder 524 in the encoded data $\hat{y}$ for each image block of input data x. The multiplexer 540 may cause a vector value output from a predetermined encoder selected by the classifier 530 to be transmitted to the storage in the multiplexer 540, according to the selection data for the selected encoder-decoder pair for each input data x output by the classifier 530.

The encoded data $\hat{y}$ may be compressed into a bitstream through entropy encoding and then transmitted to the decoding module 550 (e.g., the decoding module 114 or the decoding module 124 of FIG. 1). At this time, the identification data may also be transmitted to the decoding module 550. The identification data may be included in the bitstream to be transmitted to the decoding module 550. Alternatively, the identification data may be transmitted to the decoding module 550 separately from the bitstream. The decoding module 550 may reconstruct the encoded data $\hat{y}$ without loss through entropy decoding. In some embodiments, the entropy encoding and entropy decoding process may be omitted.

The decoding module 550 may generate reconstructed data (e.g., $\hat{x}_1$ or $\hat{x}_2$) corresponding to the input data x by performing decoding on the encoded data $\hat{y}$. The decoding module 550 may perform decoding on a vector value at each position of the encoded data $\hat{y}$ using a decoder corresponding to the vector value, based on the received identification data. The original data may be reconstructed from the vector value (e.g., the latent vector value) through decoding.

The decoding module 550 may include a demultiplexer 560 and a plurality of decoders (e.g., the first decoder 572 and the second decoder 574). The demultiplexer 560 may determine which of the first decoder 572 and the second decoder 574 the vector value (e.g., each latent vector value selected for each of the plurality of image blocks) included in the encoded data $\hat{y}$ to transmit to based on the flag value in the identification data. For example, the demultiplexer 560 may transmit the vector value included in the encoded data $\hat{y}$ to the first decoder 572 if the flag value in the identification data $\hat{y}_{c(x,y)}$ at the position value (x, y) is "0", and transmit the vector value included in the encoded data $\hat{y}$ to the second decoder 574 if the flag value is "1". The flag value of "0" may indicate that the vector value $\hat{y}_1$ obtained by the first encoder 522 is stored in the position value (x, y) of the encoded data $\hat{y}$, and the flag value of "1" may indicate that the vector value $\hat{y}_2$ obtained by the second encoder 524 is stored in the position value (x, y) of the encoded data $\hat{y}$.

When the vector value is received from the demultiplexer 560, the first decoder 572 may generate reconstructed data $\hat{x}_1$ corresponding to the input data x by performing decoding on the received vector value. When the vector value is received from the demultiplexer 560, the second decoder 574 may generate reconstructed data $\hat{x}_2$ corresponding to the input data x by performing decoding on the received vector value.

[Equation 1]

$$\hat{x}\,(x',y') =\; D_{c(x,y)}(\hat{y}(x,y))$$

Equation 1 may indicate generating reconstructed data $\hat{x}\,(x',y')$ output from a decoder $D_c$ selected by the flag value c by inputting the vector value $\hat{y}\,(x, y)$ stored in the position value (x, y) of the encoded data $\hat{y}$ to the decoder $D_c$. For decoding a predetermined vector value, only one of the plurality of decoders (e.g., the first decoder 572 and the second decoder 574) is executed, which may thus reduce the amount of computation compared to when the plurality of decoders are executed.

The first decoder 572 and the second decoder 574 may be implemented as neural network models (e.g., deep neural networks). The first decoder 572 and the second decoder 574 may include, for example, a transposed convolutional layer. The first decoder 572 and the second decoder 574 may have the same or different structures. When the structures are the same, the first encoder 572 and the second encoder 574 may have different neural network model parameters (e.g., connection weights between nodes or biases). The first decoder 572 and the second decoder 574 may be trained using unsupervised learning or self-supervised learning.

As in the encoding-decoding structure described in this embodiment, the classifier 530 may select an optimal encoder-decoder pair to perform encoding-decoding for each input data from a plurality of encoder-decoder pairs, thereby enhancing the compression ratio in a limited footprint and improving the quality of reconstructed data (e.g., the quality of a reconstructed image).

In the series of processes for performing encoding and decoding described above, the dimensions of a transmittable vector value are specified in advance. Accordingly, the first encoder 522 and the second encoder 524 may be trained to generate vector values of specified dimensions and a preset bit-depth. The first decoder 572 and the second decoder 574 may each be trained to reconstruct the original data using the received vector value. The first pair of the first encoder 522 and the first decoder 572 may be trained simultaneously, and the second pair of the second encoder 524 and the second decoder 574 may be trained simultaneously. The loss used in training may be defined as a weighted sum of, for example, a distortion loss to minimize the difference between reconstructed data and input data (original data) and a rate loss to minimize the amount of vector values transmitted, but is not limited thereto.

The encoders (e.g., the first encoder 522 and the second encoder 524), the decoders (e.g., the first decoder 572 and the second decoder 574), and the classifier 530 may be trained based on a loss function that calculates a weighted sum of rate-distortion losses applied to learned image compression based on the output value of the classifier 530. Equation 2 below shows an example of such a loss function.

[Equation 2]

$$L = \sum_{i}^{N} c_i \times \{\lambda \cdot (x - \hat{x}_i)^2 + R(\hat{y}_i)\}$$

$$\hat{x}_i = D_i(\hat{y}_i)$$

$$R(\hat{y}) = E_{p(x)}[-\log(p\,(\hat{y}))]$$

$$c = OH\{M([Q(E_0(x)), Q(E_1(x))])\}$$

In Equation 2, *i* is an index for identifying a neural codec, the index for identifying an encoder-decoder pair. N denotes the total number of encoder-decoder pairs. $c_i$ denotes the output of the classifier 530, and $\lambda$ denotes a constant for the weighted sum. x denotes input data, and $\hat{x}_i$ denotes reconstructed data into which the vector value $\hat{y}_i$ is decoded by a decoder $D_i$. R(~) denotes a loss for ~, and as in Equation 2, R(~) may be defined as a value determined by the entropy loss function of $E_{p(x)}$ [-log($p\,(\hat{y})$)]. L denotes the total loss including a distortion loss and a rate loss R(~) based on the difference between the input data x and the reconstructed data $\hat{x}_i$. OH denotes a one-hot representation, and M denotes the output value of the classifier 530. $Q(E_0(x))$ denotes a first input value of the classifier 530 determined based on the output of the first encoder 522, and $Q(E_1(x))$ denotes a second input value of the classifier 530 determined based on the output of the second encoder 524. c is a flag value or index value determined through the one-hot representation of the output value of the classifier 530, and may indicate which encoder-decoder pair to use for the input data x. If the total loss L is determined as above, the parameters (e.g., connection weights between nodes or biases) of the encoders, the decoders, and the classifier 530 may be updated to minimize the total loss L. The error backpropagation algorithm and gradient descent of machine learning may be used to update the parameters.

In one or more embodiments, encoder-decoder pairs may be trained with different losses. Each encoder-decoder pair may be trained with a different optimization objective function. For example, referring to FIG. 5B, for the first pair of the first encoder 522 and the first decoder 572, a loss $L_1(\hat{x}_1,x)$ may be determined by the input data x and the reconstructed data $\hat{x}_1$ output from the first decoder 572, and for the second pair of the second encoder 524 and the second decoder 574, a loss $L_2(\hat{x}_2, x)$ may be determined by the input data x and the reconstructed data $\hat{x}_2$ output from the second decoder 574. For example, the loss $L_1(\hat{x}_1,x)$ may be a loss for optimizing the first encoder 522 and the first decoder 572 to achieve a high compression ratio, and the loss $L_2(\hat{x}_2, x)$ may be a loss for optimizing the second encoder 524 and the second decoder 574 to achieve a relatively high quality (or low compression ratio). As another example, the loss $L_1(\hat{x}_1,x)$ may be a loss suitable for reconstructing dark parts of an image, and the loss $L_2(\hat{x}_2, x)$ may be a loss suitable for reconstructing high-contrast parts of an image. The final loss may be determined by the sum (or weighted sum) of the loss $L_1(\hat{x}_1,x)$ and the loss $L_2(\hat{x}_2,x)$, and the encoders, the decoders, and the classifier 530 may be trained based on the final loss L. The classifier 530 may be trained to select an appropriate pair from multiple encoder-decoder pairs according to the final loss L. Through such training, each encoder-decoder pair may be induced to perform a different role.

FIG. 6 is a diagram illustrating a structure for encoding and decoding data using different numbers of encoders and decoders according to one or more embodiments.

As shown in FIG. 5A, the number of encoders and the number of decoders may be equal, but embodiments are not limited thereto. As shown in FIG. 6, the number of encoders may be different from the number of decoders. Referring to FIG. 6, an encoding module 610 (e.g., the encoding module 112 or the encoding module 122 of FIG. 1) may include four encoders: a first encoder 622, a second encoder 624, a third encoder 626, and a fourth encoder 628, and a decoding module 650 (e.g., the decoding module 114 or the decoding module 124 of FIG. 1) may include two decoders: a first decoder 672 and a second decoder 674, but the number of encoders and the number of decoders are not limited thereto. A single decoder may be provided.

The encoding module 610 may further include a classifier 630 and a multiplexer 640, in addition to the encoders described above (e.g., the first encoder 622, the second encoder 624, the third encoder 626, and the fourth encoder 628). Each of the first encoder 622, the second encoder 624, the third encoder 626, and the fourth encoder 628 may generate a vector value (e.g., a latent vector value) corresponding to input data x by encoding the input data x. The first encoder 622 may generate a vector value $\hat{y}_1$ by encoding the input data x, and the second encoder 624 may generate a vector value $\hat{y}_2$ by encoding the input data x. The third encoder 626 may generate a vector value $\hat{y}_3$ by encoding the input data x, and the fourth encoder 628 may generate a vector value $\hat{y}_4$ by encoding the input data x. The first encoder 622, the second encoder 624, the third encoder 626, and the fourth encoder 628 may be implemented as neural network models (e.g., deep neural networks), and may have the same or different neural network model structures. When the structures are the same, the first encoder 622, the second encoder 624, the third encoder 626, and the fourth encoder 628 may have different neural network model parameters (e.g., weights or biases).

The vector values $\hat{y}_1$, $\hat{y}_2$, $\hat{y}_3$, and $\hat{y}_4$ may each be decoded by a predetermined decoder. For example, the vector values $\hat{y}_1$ and $\hat{y}_2$ may be decoded by the first decoder 672, and the vector values $\hat{y}_3$, and $\hat{y}_4$ may be decoded by the second decoder 674. The first encoder 622 and the second encoder 624 may be paired with the first decoder 672, and the third encoder 626 and the fourth encoder 628 may be paired with the second decoder 674.

The classifier 530 may select an encoder-decoder pair to be applied for each input data x. The classifier 630 may receive the vector values $\hat{y}_1$, $\hat{y}_2$, $\hat{y}_3$, and $\hat{y}_4$, respectively output from the first encoder 622, the second encoder 624, the third encoder 626, and the fourth encoder 628, and determine a vector value to be included in encoded data $\hat{y}$ among the received vector values $\hat{y}_1$, $\hat{y}_2$, $\hat{y}_3$, and $\hat{y}_4$. The classifier 630 may determine an optimal encoder-decoder pair by analyzing the received vector values $\hat{y}_1$, $\hat{y}_2$, $\hat{y}_3$, and $\hat{y}_4$. The classifier 630 may generate identification data including a flag value or index value for identifying the determined encoder-decoder pair.

The first encoder 622, the second encoder 624, the third encoder 626, and the fourth encoder 628 may be connected to the multiplexer 640, and the multiplexer 640 may control the connection between the first encoder 622, the second encoder 624, the third encoder 626, and the fourth encoder 628 and a data storage so that the vector value selected by the classifier 630 may be stored in the encoded data $\hat{y}$. In the data storage, the vector value transmitted by the multiplexer 640 may be stored in the encoded data $\hat{y}$.

The encoded data $\hat{y}$ and the identification data may be transmitted to the decoding module 650. The decoding module 650 may generate reconstructed data (e.g., $\hat{x}_1$ or $\hat{x}_2$) corresponding to the input data x by performing decoding on the encoded data $\hat{y}$, based on the identification data.

The decoding module 650 may further include the decoders (e.g., the first decoder 672 and the second decoder 674) described above and a demultiplexer 660. The demultiplexer 660 may determine which of the first decoder 672 and the second decoder 674 the vector value included in the encoded data $\hat{y}$ to transmit to based on the flag value in the identification data.

When the vector value $\hat{y}_1$ or $\hat{y}_2$ included in the encoded data $\hat{y}$ is received from the demultiplexer 660, the first decoder 672 may generate reconstructed data $\hat{x}_1$ corresponding to the input data x by performing decoding on the received vector value. When the vector value $\hat{y}_3$ or $\widehat{y_4}$ included in the encoded data $\hat{y}$ is received from the demultiplexer 660, the second decoder 674 may generate reconstructed data $x_2$ corresponding to the input data x by performing decoding on the received vector value.

FIG. 7 is a diagram illustrating a structure for encoding and decoding data using a plurality of encoders and a plurality of decoders according to one or more embodiments.

Unlike the embodiment of FIG. 5A, in the embodiment of FIG. 7, a vector value to be included in encoded data $\hat{y}$ may be determined based on input data x, rather than vector values obtained from encoders, and encoding may be performed not by all the encoders but by one selected encoder. Referring to FIG. 7, an encoding module 710 (e.g., the encoding module 112 or the encoding module 122 of FIG. 1) may include a first encoder 522, a second encoder 524, a neural network model 720, and a multiplexer 540. The first encoder 522 may form a first pair with the first decoder 572, and the second encoder 524 may form a second pair with the second decoder 574.

The input data x may be input to the neural network model 720, and the neural network model 720 may select an encoder-decoder pair to be applied to the input data x based on the input data x. The neural network model 720 may be trained to select an optimal encoder-decoder pair to be applied to encoding-decoding of the input data x based on the input data x. The neural network model 720 may generate identification data including a flag value or index value for identifying the determined encoder-decoder pair. The neural network model 720 may determine which encoder-decoder pair is appropriate for each input data x and transmit the determined result to the multiplexer 540.

In this embodiment, rather than both the first encoder 522 and the second encoder 524 performing encoding, one, of the first encoder 522 and the second encoder 524, included in an encoder-decoder pair selected by the neural network model 720 may be selected to encode the input data x. If the first pair of the first encoder 522 and the first decoder 572 is selected by the neural network model 720, the first encoder 522 may encode the input data x. In this case, the second encoder 524 may not perform encoding. A vector value $\widehat{y_1}$ obtained from the first encoder 522 through the encoding process may be included in encoded data $\hat{y}$ through the multiplexer 540. The vector value $\widehat{y_1}$ may be stored at a storage position in the encoded data $\hat{y}$ corresponding to the input data x, and a flag value (or index value) for identifying a decoder (e.g., the first decoder 572) to perform decoding on the vector value $\widehat{y_1}$ may be stored at a storage position in identification data corresponding to the input data x. If the second pair of the second encoder 524 and the second decoder 574 is selected by the neural network model 720, the second encoder 524 may encode the input data x. In this case, the first encoder 522 may not perform encoding. A vector value $\hat{y}_2$ obtained from the second encoder 524 through the encoding process may be included in encoded data $\hat{y}$ through the multiplexer 540. The vector value $\hat{y}_2$ may be stored at a storage position in the encoded data $\hat{y}$ corresponding to the input data x, and a flag value (or index value) for identifying a decoder (e.g., the second decoder 574) to perform decoding on the vector value $\hat{y}_2$ may be stored at a storage position in identification data corresponding to the input data x.

The encoder-decoder pair to perform encoding and decoding may be selected by means other than the neural network model 720. For example, an encoder to encode the input data x may be selected based on a statistical feature extracted from the input data x. If the input data x is an image data, the statistical feature extracted from the input data x may be a statistical feature (e.g., a mean and/or variance of the pixel values of the image data) of the pixel values of the input data x. The mean of the pixel values may be determined by dividing the sum of the pixel values by the number of pixels, and the variance of the pixel values may be determined based on the difference between each pixel value and the mean of the pixel values. Depending on the interval in which each of the mean and variance falls, an encoder to encode the image data x may be selected. For example, if the mean of the pixel values of the input data x falls within a defined first mean interval and the variance of the pixel values falls within a defined first variance interval, the first encoder 522 may be selected to encode the input data x. If the mean of the pixel values of the input data x falls within a defined second mean interval (different from the first mean interval), and the variance of the pixel values falls within a defined second variance interval (different from the first variance interval), the second encoder 524 may be selected to encode the input data x. In addition to using the mean and/or the variance of the pixel values described above, it is possible to use other statistical features to select an encoder to perform the encoding on the input data x. For example, it is possible to select an encoder to encode the input data x from a plurality of encoders based on a histogram representing a distribution of pixel values of the input data x or skewness representing a degree of skewness in the distribution of pixel values of the input data x.

The encoded data $\hat{y}$ and the identification data may be transmitted to the decoding module 730, and the decoding module 730 may perform decoding on each vector value included in the encoded data $\hat{y}$. The decoding module 650 may include a demultiplexer 560, a first decoder 572, and a second decoder 574. The demultiplexer 560 may determine which of the first decoder 572 and the second decoder 574 the vector value included in the encoded data ŷ to transmit based on the flag value in the identification data.

When the vector value $\widehat{y_1}$ included in the encoded data ŷ is received from the demultiplexer 560, the first decoder 572 may generate reconstructed data $\hat{x}_1$ corresponding to the input data x by performing decoding on the received vector value $\hat{y}_1$. When the vector value $\hat{y}_2$ included in the encoded data ŷ is received from the demultiplexer 560, the second decoder 574 may generate reconstructed data $\hat{x}_2$ corresponding to the input data x by performing decoding on the received vector value $\hat{y}_2$,

In this embodiment, regardless of the number of encoder-decoder pairs (or neural codecs), only one pair of encoder and decoder may perform encoding and decoding for each input data x. Accordingly, even if the number of encoder-decoder pairs increases, the amount of computation may show little or no increase. When the input data x is data about block regions of an image, the shown encoding-decoding structure may execute only the selected encoder for each image block region without executing all encoders, thereby providing high efficiency.

FIG. 8 is a diagram illustrating a data processing system including a data encoding device and a data decoding device according to one or more embodiments.

Referring to FIG. 8, a data processing system may include a data encoding device 810, a data decoding device 820, and a network 830. The data processing system may be used in, for example, a content providing device, a video broadcasting device, a terminal device for transmitting image data in a video call or video conference, and a mobile application processor (AP).

The data encoding device 810 may be a device for generating a bitstream by encoding (or compressing) data and transmitting the generated bitstream to an external device. The data may include at least one of image data, video data, audio data, or any combination thereof, but is not limited thereto. The data encoding device 810 may generate encoded data with a data size reduced by encoding the data and transmit the generated encoded data, rather than transmitting the entire data, to reduce the amount of data transmitted and increase the transmission speed. The data encoding device 810 may include, for example, a content providing device that provides data content, a data broadcasting device, or a terminal device that performs data transmission in a data call or video conference, but is not limited thereto.

The data encoding device 810 may include a first processor 815 configured to perform encoding on data. The first processor 815 may include an encoding module configured to generate encoded data by performing encoding on data. The encoding module may perform encoding using an encoder, and obtain a vector value (e.g., a latent vector value) with reduced data dimensions as a result of performing encoding. The encoding module may generate encoded data (or compressed data) by collecting the vector values generated for respective data. Additionally, the encoding module may generate identification data for identifying a decoder to perform decoding for each vector value generated through the encoding process. The first processor 815 may correspond to the first processor 110 described with reference to FIG. 1, and the entirety or a portion of the description of the first processor 110 provided herein may also apply to the first processor 815.

The encoded data generated by the data encoding device 810 and the identification data for identifying a decoder for each vector value may be transmitted (or delivered) to the data decoding device 820 via the network 830. The network 830 may include a wired network of a cable network, a short-range wireless network, or a long-range wireless network. The short-range wireless network may include, for example, Bluetooth, wireless fidelity (Wi-Fi), or infrared data association (IrDA), and the long-range wireless network may include a legacy cellular network, a 3G/4G/5G network, a next-generation communication network, the Internet, or a computer network (e.g., a local area network (LAN) or a wide-area network (WAN)).

The data decoding device 820 may receive the encoded data and the identification data via the network 830. The encoded data and the identification data may be transmitted to the data decoding device 820 in the form of a bitstream. The encoded data and the identification data may be transmitted to the data decoding device 820 via the network 830 or may be transmitted to the data decoding device 820 via one or more other devices. The data decoding device 820 may include various types of electronic devices. For example, the data decoding device 820 may include a portable communication device (e.g., a smart phone), a computer device, a portable multimedia device (e.g., a tablet PC), a camera, a wearable device, a set-top box, a data streaming device, a content storage device, or a home appliance (e.g., a TV), but is not limited thereto.

The data decoding device 820 may include a second processor 825 configured to perform decoding on encoded data. The second processor 825 may include a decoding module configured to generate reconstructed data by performing decoding on encoded data. The decoding module may perform decoding using identification data and a decoder, and obtain reconstructed data corresponding to the original data as a result of performing decoding. A flag value (or index value) for identifying a decoder to perform decoding for each vector value included in the encoded data may be defined in the identification data. The decoding module may include a plurality of decoders, and may perform decoding using a decoder identified by the flag value in the identification data among the decoders. The second processor 825 may correspond to the second processor 120 described with reference to FIG. 1, and the entirety or a portion of the description of the second processor 120 provided herein may also apply to the second processor 825.

The data decoding device 820 may provide data reconstructed through decoding to a user.

In the embodiment of FIG. 1, the first processor 110 for data encoding and the second processor 120 for data decoding are both included in a single electronic device and operate. However, as in this embodiment, the first processor 815 for data encoding may be included in a first electronic device (e.g., the data encoding device 810), and the second processor 825 for data decoding may be included in a second electronic device (e.g., the data decoding device 820) different from the first electronic device.

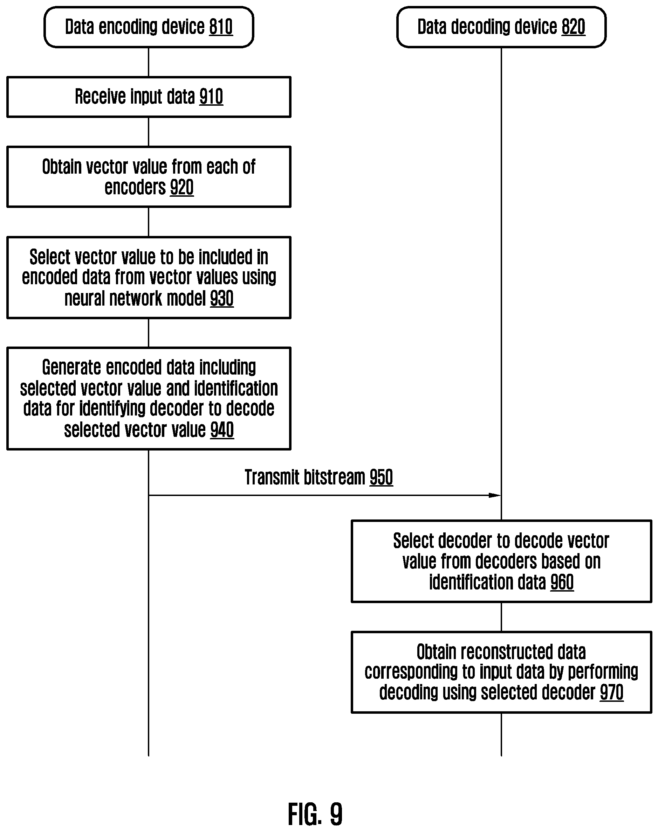

FIG. 9 is a diagram illustrating a data processing process between a data encoding device and a data decoding device according to one or more embodiments. A portion of operations of FIG. 9 may be performed simultaneously or in parallel with another operation, and the order of the operations may be changed. In addition, a portion of the operations may be omitted, or another operation may be additionally performed.

Referring to FIG. 9, in operation 910, the data encoding device 810 may receive input data. The input data may include at least one of image data, video data, audio data, or any combination thereof.

In operation 920, the data encoding device 810 may obtain a vector value (e.g., a latent vector value) into which the input data is encoded from each of a plurality of encoders (e.g., the first encoder 522 and the second encoder 524 of FIG. 5A, or the first encoder 622, the second encoder 624, the third encoder 626, and the fourth encoder 628 of FIG. 6) by inputting the input data to each of the plurality of encoders.

In operation 930, the data encoding device 810 may select a vector value to be included in encoded data from vector values from the encoders using a neural network model (e.g., the classifier 530 of FIG. 5A or the classifier 630 of FIG. 6) that receives the vector values as input.

In operation 940, the data encoding device 810 may generate encoded data including the selected vector value and identification data for identifying a decoder to decode the selected vector value. The identification data may include a flag value or index value for identifying a decoder to perform decoding on the vector value into which the input data is encoded among the plurality of decoders corresponding to the encoders. The data encoding device 810 may generate a bitstream corresponding to the input data by performing entropy encoding on the encoded data and the identification data.

In operation 950, the data encoding device 810 may transmit the bitstream to the data decoding device 820 via a network (e.g., the network 830 of FIG. 8). The data decoding device 820 may receive the bitstream via the network.

In operation 960, the data decoding device 820 may select a decoder to decode the vector value included in the encoded data among a plurality of decoders corresponding to encoders based on the identification data.

In operation 970, the data decoding device 820 may obtain reconstructed data corresponding to the input data by performing decoding on the vector value included in the encoded data using the selected decoder. The data decoding device 820 may identify a decoder to decode each vector value among the decoders based on a value (e.g., a flag value or index value) of the identification data designated for each vector value and perform decoding using the identified decoder.

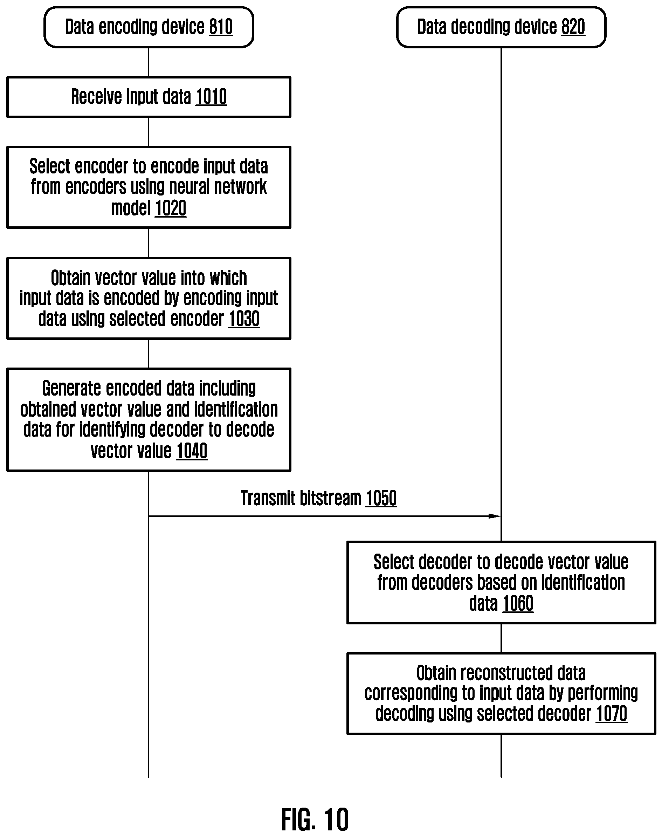

FIG. 10 is a diagram illustrating a data processing process between a data encoding device and a data decoding device according to one or more embodiments. A portion of operations of FIG. 10 may be performed simultaneously or in parallel with another operation, and the order of the operations may be changed. In addition, a portion of the operations may be omitted, or another operation may be additionally performed.

Referring to FIG. 10, in operation 1010, the data encoding device 810 may receive input data.

In operation 1020, the data encoding device 810 may select an encoder to encode the input data among a plurality of encoders (e.g., the first encoder 522 and the second encoder 524 of FIG. 7) using a neural network model (e.g., the neural network model 720 of FIG. 7) that receives the input data as input. The neural network model may, for example, select one encoder to perform encoding on the input data from the encoders.

In operation 1030, the data encoding device 810 may obtain a vector value (e.g., a latent vector value) into which the input data is encoded from the selected encoder by encoding the input data using the encoder selected by the neural network model.

In operation 1040, the data encoding device 810 may generate encoded data including the obtained vector value and identification data for identifying a decoder to decode the obtained vector value. The data encoding device 810 may generate a bitstream corresponding to the input data by performing entropy encoding on the encoded data and the identification data.

In operation 1050, the data encoding device 810 may transmit the bitstream to the data decoding device 820 via a network (e.g., the network 830 of FIG. 8). The data decoding device 820 may receive the bitstream via the network.

In operation 1060, the data decoding device 820 may select a decoder to decode the vector value included in the encoded data among a plurality of decoders corresponding to encoders based on the identification data.

In operation 1070, the data decoding device 820 may obtain reconstructed data corresponding to the input data by performing decoding on the vector value included in the encoded data using the selected decoder.

Operation 1010 and operations 1050 to 1070 may correspond to operation 910 and operations 950 to 970 of FIG. 9, respectively.

FIG. 11 is a block diagram illustrating components of an electronic device for performing a data processing method of data encoding according to one or more embodiments.

Referring to FIG. 11, an electronic device 1100 is a device for performing a data processing method of encoding data, and may correspond to, for example, the data encoding device 810 of FIG. 8. The electronic device 1100 may include a first processor 1110, a memory 1120, and a communication circuit 1130. The components of the electronic device 1100 may communicate with each other through a communication bus 1140. In one or more embodiments, at least one (e.g., the communication circuit 1130) of these components may be omitted from the electronic device 1100, or one or more other components (e.g., another processor, a display circuit, and an input circuit) may be added thereto.

The processor 1110 may control another component (e.g., a hardware or software component) of the electronic device 1100, and may perform a variety of data processing or computation. According to one or more embodiments, as at least part of data processing or computation, the first processor 1110 may store instructions or data received from another component in the memory 1120, process the instructions or data stored in the memory 1120, and store result data in the memory 1120.

The first processor 1110 may include a CPU, a GPU, an NPU, an MPU, a DPU, a VPU, a video processor, an image processor, a display processor, a microprocessor, a processor core, a multi-core processor, an ASIC, an FPGA, or any combination thereof. The first processor 1110 may correspond to the first processor 110 described in FIG. 1, and the entirety or a portion of the description of the first processor 110 provided herein may also apply to the first processor 1110.

The memory 1120 may store a variety of data used by a component (e.g., the first processor 1110) of the electronic device 1100. The data may include, for example, a program (e.g., an application), and input data and/or output data related thereto. The memory 1120 may include a volatile memory or a non-volatile memory. The memory 1120 may store instructions executable by the first processor 1110.

The communication circuit 1130 may support establishment of a direct (e.g., wired) communication channel or wireless communication channel between the electronic device 1100 and another device (e.g., the electronic device 1200 of FIG. 12), and performance of communication through the established communication channel. The communication circuit 1130 may include a communication processor that operates independently of the first processor 1110 and supports direct (e.g., wired) or wireless communication. The communication circuit 1130 may include a wireless communication module configured to perform wireless communication (e.g., a Bluetooth communication module, a cellular communication module, a Wi-Fi communication module, or a GNSS communication module) or a wired communication module (e.g., a LAN communication module or a power line communication (PLC) module).

In one or more embodiments, when the instructions stored in the memory 1120 are executed by the first processor 1110, the first processor 1110 may receive input data, and obtain a vector value (e.g., a latent vector value) into which the input data is encoded from each of a plurality of encoders (e.g., the first encoder 522 and the second encoder 524 of FIG. 5A, or the first encoder 622, the second encoder 624, the third encoder 626, and the fourth encoder 628 of FIG. 6) by inputting the input data to each of the plurality of encoders. The first processor 1110 may select a vector value to be included in encoded data from vector values from the encoders using a neural network model (e.g., the classifier 530 of FIG. 5A or the classifier 630 of FIG. 6) that receives the vector values as input, and generate encoded data including the selected vector value and identification data for identifying a decoder to decode the selected vector value. The identification data may include a flag value or index value for identifying a decoder to perform decoding on the vector value into which the input data is encoded among the plurality of decoders (e.g., the first decoder 572 and the second decoder 574 of FIG. 5A or the first decoder 672 and the second decoder 674 of FIG. 6) corresponding to the encoders.

In one or more embodiments, when the instructions stored in the memory 1120 are executed by the first processor 1110, the first processor 1110 may receive input data, and select an encoder to encode the input data among a plurality of encoders (e.g., the first encoder 522 and the second encoder 524 of FIG. 7) using a neural network model (e.g., the neural network model 720 of FIG. 7) that receives the input data as input. The first processor 1110 may obtain a vector value by encoding the input data using the selected encoder. Encoding may be performed by some encoders selected from the encoders. The first processor 1110 may generate encoded data including the obtained vector value and identification data for identifying a decoder to decode the obtained vector value.

The first processor 1110 may control the communication circuit 1130 to transmit a bitstream including the encoded data and the identification data to another device (e.g., the electronic device 1200 of FIG. 12).

FIG. 12 is a block diagram illustrating components of an electronic device for performing a data processing method of data decoding according to one or more embodiments.

Referring to FIG. 12, an electronic device 1200 is a device for performing a data processing method of decoding data, and may correspond to, for example, the data decoding device 820 of FIG. 8. The electronic device 1200 may include a second processor 1210, a memory 1220, and a communication circuit 1230. The components of the electronic device 1200 may communicate with each other through a communication bus 1240. In one or more embodiments, at least one (e.g., the communication circuit 1230) of these components may be omitted from the electronic device 1200, or one or more other components (e.g., another processor, a display circuit, and an input circuit) may be added thereto.

The second processor 1210 may control another component (e.g., a hardware or software component) of the electronic device 1200, and may perform a variety of data processing or computation. According to one or more embodiments, as at least part of data processing or computation, the second processor 1210 may store instructions or data received from another component in the memory 1220, process the instructions or data stored in the memory 1220, and store result data in the memory 1220.

The second processor 1210 may include a CPU, a GPU, an NPU, an MPU, a DPU, a VPU, a video processor, an image processor, a display processor, a microprocessor, a processor core, a multi-core processor, an ASIC, an FPGA, or any combination thereof. The second processor 1210 may correspond to the second processor 120 described in FIG. 1, and the entirety or a portion of the description of the second processor 120 provided herein may also apply to the second processor 1210.

The memory 1220 may store a variety of data used by a component (e.g., the second processor 1210) of the electronic device 1200. The memory 1220 may include a volatile memory or a non-volatile memory. The memory 1220 may store instructions executable by the second processor 1210.

The communication circuit 1230 may support establishment of a direct (e.g., wired) communication channel or wireless communication channel between the electronic device 1200 and another device (e.g., the electronic device 1100 of FIG. 11), and performance of communication through the established communication channel. The communication circuit 1230 may include a wireless communication module for performing wireless communication or a wired communication module. The communication circuit 1230 may receive, for example, encoded data and identification data from another device. The encoded data and the identification data may be transmitted in the form of a bitstream.

In one or more embodiments, when the instructions stored in the memory 1220 are executed by the second processor 1210, the second processor 1210 may select a decoder to decode a vector value included in encoded data among a plurality of decoders (e.g., the first decoder 572 and the second decoder 574 of FIGS. 5A and 7 or the first decoder 672 and the second decoder 674 of FIG. 6) corresponding to encoders based on identification data, in response to receiving the encoded data and the identification data. The second processor 1210 may obtain reconstructed data corresponding to the input data by performing decoding on the vector value included in the encoded data using the selected decoder. The second processor 1210 may identify a decoder to decode each vector value among the decoders based on a value (e.g., a flag value or index value) of the identification data designated for each vector value and perform decoding using the identified decoder.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For the purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

A number of embodiments have been described above. Nevertheless, it should be understood that various modifications may be made to these embodiments. For example, suitable results may be achieved if the described techniques are performed in a different order, and/or if components in a described system, architecture, device, or circuit are combined in a different manner, and/or replaced or supplemented by other components.

Therefore, other implementations and embodiments are also within the scope of the following claims.

**Claims**

1. A data processing method comprising:

   receiving, by a first processor, input data;
   selecting, by the first processor, an encoder to encode the input data among a plurality of encoders based on the input data;
   obtaining, by the first processor, a vector value by encoding the input data using the selected encoder; and
   generating, by the first processor, encoded data comprising the vector value, and identification data that identifies a decoder to decode the vector value among a plurality of decoders.

2. The data processing method of claim 1, wherein the identification data comprises a flag value or index value for identifying the decoder among the plurality of decoders corresponding to the plurality of encoders.

3. The data processing method of claim 1 or 2, further comprising:

   receiving, by a second processor, the encoded data and the identification data;
   selecting, by the second processor, a decoder to decode the vector value among the plurality of decoders, based on the identification data; and
   obtaining, by the second processor, reconstructed data corresponding to the input data by performing decoding on the vector value comprised in the encoded data using the selected decoder.

4. The data processing method of claim 3, wherein

   each of the plurality of decoders has a relationship of a pair with one of the plurality of encoders, and
   the number of the plurality of decoders is equal to or less than the number of the plurality of encoders.

5. The data processing method of any of the claims 3-4, wherein
   a first pair of a first encoder and a first decoder and a second pair of a second encoder and a second decoder are trained based on different loss functions.

6. The data processing method of any of the claims 3-5, wherein the encoded data and the identification data are transmitted from the first processor to the second processor, or output from the first processor, stored in a memory, and then transmitted to the second processor.

7. The data processing method of any of the claims 3-6, wherein the first processor, the second processor, and the memory are included in a system-on-chip (SoC).

8. The data processing method of any of the claims 1-7, wherein the input data comprises at least one of image data, video data, audio data, or any combination thereof and/or wherein the input data comprises pixel values of pixels included in a local region of an image.

9. The data processing method of any of the claims 3-8, wherein

   the first processor is included in a first electronic device, and
   the second processor is included in a second electronic device.

10. The data processing method of any of the claims 1-9,

    wherein the input data is an image data, and
    wherein the first processor is further configured to select the encoder to encode the image data among the plurality of encoders based on pixel values of the image data.

11. The data processing method of any of the claims 1-9,
    wherein the first processor is further configured to select the encoder to encode the input data among the plurality of encoders using a neural network model that receives the input data as input.

12. An electronic device for performing a data processing method, the electronic device comprising:

    a first processor; and
    a memory configured to store instructions to be executed by the first processor,
    wherein when the instructions are executed by the first processor, the first processor is configured to perform the method according to any of the preceding claims.

13. The electronic device of claim 12, further comprising:

    a second processor,
    wherein the second processor is configured to:

        in response to receiving the encoded data and the identification data,
        select a decoder to decode the first vector value among the plurality of decoders, based on the identification data, and
        obtain reconstructed data corresponding to the input data by performing decoding on the vector value comprised in the encoded data using the selected decoder.

14. The electronic device of claim 12 or 13, further comprising:

    a communication circuit,
    wherein the first processor controls the communication circuit to transmit a bitstream comprising the encoded data and the identification data to another device.

15. The electronic device of any of the claims 12-14, wherein

    the plurality of encoders comprise a first encoder and a second encoder,
    the plurality of decoders comprise a first decoder paired with the first encoder and a second decoder paired with the second encoder, and
    a first pair of a first encoder and a first decoder and a second pair of a second encoder and a second decoder are trained based on different loss functions.

<u>100</u>

| First processor <u>110</u> | Second processor <u>120</u> |
|---|---|
| Encoding module <u>112</u>    Decoding module <u>114</u> | Encoding module <u>122</u>    Decoding module <u>124</u> |

140

Memory <u>130</u>

FIG. 1

```
                    ┌──────────┐
                    │  Start   │
                    └────┬─────┘
                         │
                         ▼
┌─────────────────────────────────────────────────┐
│              Receive input data                   │──── 210
└────────────────────────┬──────────────────────────┘
                         │
                         ▼
┌─────────────────────────────────────────────────┐
│         Obtain vector value from each of encoders │──── 220
└────────────────────────┬──────────────────────────┘
                         │
                         ▼
┌─────────────────────────────────────────────────┐
│   Select vector value to be included in encoded data │──── 230
│   from vector values using neural network model      │
└────────────────────────┬──────────────────────────┘
                         │
                         ▼
┌─────────────────────────────────────────────────┐
│  Generate encoded data including selected vector value and │──── 240
│  identification data for identifying decoder to decode selected │
│  vector value                                      │
└────────────────────────┬──────────────────────────┘
                         │
                         ▼
                    ┌──────────┐
                    │   End    │
                    └──────────┘
```

# FIG. 2

Start

Receive input data — 310

Select encoder to encode input data from encoders using neural network model — 320

Obtain vector value into which input data is encoded by encoding input data using selected encoder — 330

Generate encoded data including obtained vector value and identification data for identifying decoder to decode vector value — 340

End

FIG. 3

```
          ( Start )
              │
              ▼
┌──────────────────────────────────────────────┐
│  Receive encoded data and identification data  │──── 410
└──────────────────────────────────────────────┘
              │
              ▼
┌──────────────────────────────────────────────┐
│ Select decoder to decode vector value from     │
│ decoders based on identification data           │──── 420
└──────────────────────────────────────────────┘
              │
              ▼
┌──────────────────────────────────────────────┐
│ Obtain reconstructed data corresponding to      │
│ input data by performing decoding using         │──── 430
│ selected decoder                                │
└──────────────────────────────────────────────┘
              │
              ▼
           ( End )
```

# FIG. 4

**FIG. 5A**

**FIG. 5B**

FIG. 6

**FIG. 7**

**Data encoding device**
**810**

**First processor**
**815**

**Network**
**830**

**Data decoding device**
**820**

**Second processor**
**825**

FIG. 8

```
┌─────────────────────────────┐          ┌─────────────────────────────┐
│  Data encoding device 810   │          │  Data decoding device 820   │
└─────────────────────────────┘          └─────────────────────────────┘
```

Receive input data 910

Obtain vector value from each of encoders 920

Select vector value to be included in encoded data from vector values using neural network model 930

Generate encoded data including selected vector value and identification data for identifying decoder to decode selected vector value 940

Transmit bitstream 950 →

Select decoder to decode vector value from decoders based on identification data 960

Obtain reconstructed data corresponding to input data by performing decoding using selected decoder 970

## FIG. 9

Data encoding device 810

Data decoding device 820

Receive input data 1010

Select encoder to encode input data from encoders using neural network model 1020

Obtain vector value into which input data is encoded by encoding input data using selected encoder 1030

Generate encoded data including obtained vector value and identification data for identifying decoder to decode vector value 1040

Transmit bitstream 1050

Select decoder to decode vector value from decoders based on identification data 1060

Obtain reconstructed data corresponding to input data by performing decoding using selected decoder 1070

FIG. 10

1100

First processor
1110

Memory
1120

1140

Communication
circuit 1130

FIG. 11

1200

Second processor
1210

Memory
1220

1240

Communication
circuit 1230

FIG. 12

**EUROPEAN SEARCH REPORT**

Application Number

EP 25 17 4742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/316588 A1 (DING DING [US] ET AL) 5 October 2023 (2023-10-05) <br> * paragraph [0005] - paragraph [0012] * <br> * paragraph [0083] - paragraph [0088] * <br> * paragraph [0106] - paragraph [0142] * <br> * paragraph [0172] - paragraph [0173] * <br> * figure 15 * <br> ----- | 1-15 | INV. <br> H04N19/103 <br> G06T9/00 <br> H04N19/147 <br> H04N19/172 <br> H04N19/46 |
| X | EP 4 404 556 A1 (SAMSUNG ELECTRONICS CO LTD [KR]) 24 July 2024 (2024-07-24) <br> * paragraph [0061] * <br> * paragraph [0110] - paragraph [0112] * <br> * paragraph [0130] * <br> * figure 4 * <br> ----- | 1-15 | |
| X | KR 2020 0005403 A (INSIGNAL CO LTD [KR]; IUCF KOREA AEROSPACE UNIV [KR]) 15 January 2020 (2020-01-15) <br> * paragraph [0059] - paragraph [0062] * <br> ----- | 1-15 | |
| | | | TECHNICAL FIELDS SEARCHED (IPC) <br><br> H04N <br> G06T |

The present search report has been drawn up for all claims

| Place of search | Date of completion of the search | Examiner |
|---|---|---|
| Munich | 17 October 2025 | Vaquero, Raquel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 25 17 4742**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-10-2025**

| Patent document cited in search report | Publication date | Patent family member(s) | Publication date |
|---|---|---|---|
| US 2023316588 A1 | 05-10-2023 | CN 117461055 A<br>EP 4298605 A1<br>US 2023316588 A1<br>WO 2023192096 A1 | 26-01-2024<br>03-01-2024<br>05-10-2023<br>05-10-2023 |
| EP 4404556 A1 | 24-07-2024 | NONE | |
| KR 20200005403 A | 15-01-2020 | KR 20200005402 A<br>KR 20200005403 A | 15-01-2020<br>15-01-2020 |

EPO FORM P0459